# EUROPEAN PATENT SPECIFICATION

(11) **EP 4 090 207 B1**
(45) Date of publication and mention of the grant of the patent: **01.11.2023**
(21) Application number: 21703981.7
(22) Date of filing: 13.01.2021
(51) Int. Cl.: A47J 43/07

(54) **EMULSIFYING TOOL AND MACHINERY FOR PREPARING FOOD PRODUCTS COMPRISING SUCH A TOOL**
EMULGIERWERKZEUG UND MASCHINE ZUM ZUBEREITEN VON LEBENSMITTELN, DIE EIN SOLCHES WERKZEUG UMFASST
OUTIL D'ÉMULSIFICATION ET MACHINE DE PRÉPARATION DE PRODUITS ALIMENTAIRES COMPRENANT UN TEL OUTIL

(30) Priority: 16.01.2020 IT 202000000700
(43) Date of publication of application: 23.11.2022
(73) Proprietor: Malavasi, Giuseppe, 40010 Bentivoglio (BO) (IT)
(72) Inventor: Malavasi, Giuseppe, 40010 Bentivoglio (BO) (IT)
(74) Representative: Provvisionato, Paolo
(86) International application number: PCT/IB2021/050213
(87) International publication number: WO 2021/144703

(56) References cited:
- EP-A1- 2 052 772
- WO-A1-2016/205345
- CN-A- 106 823 883
- US-A1- 2015 250 350

## Description

### Field of the invention

The present invention relates to the field of machinery for preparing food products. The invention particularly relates to emulsifying tools.

### Technological background

There are known machinery for preparing food products which comprise a process tank for containing the ingredients to be used during the preparation. These known machinery also comprise a heating system for cooking the food products. The process tank can be hermetically closed in order to produce a chamber for preparing food products. The machinery can also comprise a system for varying the pressure inside the closed chamber, for example, in order to increase the pressure thereof or, conversely, to reduce it with respect to atmospheric pressure. Inside the process tank there may be mounted processing tools, for example, in order to cut, mix or refine the ingredients and the food product being prepared. Examples of the known machinery mentioned above are described in patents EP 1603437, EP 3270752 and in utility models DE 202011000152, DE 202011000153 and DE 202011000154 from the same Applicant. The further document EP 2052772 discloses an emulsifying tool with a support and cutting tools.

On the other hand, there are known machines for dissolution which are used in various technical sectors, for example, in the chemical or pharmaceutical sector, in order to dissolve, for example, powders, active ingredients, microbeads and other products in a solvent for research and test purposes. These machines are very specific and very complex and are not suitable for use in the sector of food preparation due to both technical characteristics and the cost.

Document EP 2052772 describes a machine for dissolution which is also intended for food use, for example, in preparing food emulsions. A known example of a food emulsion is mayonnaise which is a stable emulsion of vegetable oil broken up in water with egg yolk as the emulsifier with the optional addition of vinegar or lemon juice which assist in stabilizing the emulsion itself.

The machine described in EP 2052772 comprises a disk which is mounted on a rotating shaft inside a receptacle. On one or both faces of the disk there are welded shell-like or bowl-like elements which are suitable for breaking into small pieces the solid product which is contained in the receptacle and to dissolve it in a liquid phase. The shell-like or bowl-like shape of the cutting elements which have a specific type of asymmetrical form promotes the vertical circulation of the product and the consequent homogenization of the emulsion.

The machine for dissolution described in EP 2053772 has various disadvantages, among which there may be noted the complexity of construction which involves a need to weld a number of bowl-like elements to the face of the rotating disk. In the event of one of the bowl-like elements breaking or becoming detached from the disk, it is necessary to replace the entire rotary dissolution group. Another disadvantage of the machine of EP 2053772 is the complexity of construction of the bowl-like elements which are necessary to obtain the vertical circulation of the product, for which it is necessary to use special tools and moulds. Another disadvantage is the need to distribute a number of bowl-like elements over the entire surface of the disk in order to be able to obtain a satisfactory dissolution. The dissolution machine described in EP 2053772 is complex and expensive to produce. Furthermore, this machine is constructed to perform only the function of dissolution and therefore is not generally used or appreciated in small-scale kitchens and food laboratories or where the preparation of emulsified products such as mayonnaise is only carried out sporadically or in small quantities. Another disadvantage of the machine of EP 2053772, which is particularly negative in the food sector, is the difficulty of keeping it clean, especially in the tight spaces between the disk and the external surface of the bowl-like elements, where there is the risk that deposits and encrustations of product may be formed.

### Summary of the invention

An object of the present invention is to overcome the disadvantages of the prior art by providing an emulsifying tool which can be efficiently used in machinery for preparing food products of the type indicated above. An object of the invention is particularly to provide an emulsifying tool, also referred to as a dissolving tool, which is simple and economic to manufacture. Another object of the invention is to construct an emulsifying tool which is easy to maintain and use. Another object is to provide an emulsifying tool which is easy to assemble on, and disassemble from a multipurpose machinery item for preparing food. Another object is to provide an emulsifying tool which is very easy and quick to clean after an emulsified product has been prepared.

These objects and other objects which will become clear to a person skilled in the art are achieved by an emulsifying tool having the features indicated in the appended claims. The invention further relates to a machinery item for preparing food products comprising such a tool.

According to a first aspect, there is described an emulsifying tool which is suitable for being used in machinery for preparing food products. In particular, the emulsifying tool is adapted to be mounted in an interchangeable manner on a drive shaft inside a process tank of the machinery item. The emulsifying tool comprises a support which can extend along a main plane, preferably a horizontal plane. The main plane defines two emulsion areas, one above and one below the emulsifying tool. During use, the two emulsion areas are occupied by the products to be emulsified and communicate with each other mainly through communication openings which are formed in the support. The products to be emulsified can therefore circulate from above and below the tool by mainly passing through the circulation openings in the support, even if it is not excluded that a portion of the product can circulate outside the tool, for example, by passing into the space between the tool and the side walls of the process tank. A movement transmission member can be positioned on the support in order to transmit a rotational movement thereto during use. The movement transmission member may be a central transmission member so as to transmit to the tool a rotational movement about a centre axis which is perpendicular to the above-mentioned main plane. There are provided in the emulsifying tool cutting members which can be mounted to be loose on the periphery of the support so as to oscillate with respect to the above-mentioned main plane. The oscillation of the cutting members promotes a rapid emulsion of the ingredients in the process tank and allows emulsified products to be obtained within far shorter times than are possible with the tools and machinery of the prior art.

According to a particularly advantageous aspect, the support of the emulsifying tool is a disk which is particularly suitable for use in cylindrical process tanks. According to another particularly advantageous aspect, the communication openings formed in the support of the emulsifying tool are of circular form and are therefore simple to construct and do not have any angles for easier cleaning. Preferably, the main openings are distributed angularly in an equidistant manner relative to each other over the support. Advantageously, the main openings are formed in the support near the periphery thereof. In other words, the main openings are at a greater distance from the centre of the support with respect to the distance thereof from the peripheral end of the support. In this manner, the support is less heavy in the zone in which the speed is greatest, reducing the moment of inertia. At the same time, the main openings which are significant in the emulsion process have a greater efficiency because they operate at the maximum speed possible for the same angular rotation speed of the support.

According to another particular aspect, the emulsifying tool may comprise a plurality of secondary openings which have dimensions smaller than the main openings. The secondary openings can be distributed in an angularly non-uniform manner over the support. Preferably, the secondary openings are arranged near the main openings. The non-uniform distribution of the secondary openings allows an emulsion which is not completely isotropic and homogeneous to be obtained because it introduces small random fluctuations into the product being processed. The resultant emulsified product is greatly appreciated with respect to a product which is produced with a precisely symmetrical tool probably because it makes the product more similar to a manual preparation.

According to another aspect, there is described an emulsifying tool in which the cutting members may each comprise a plate element, that is to say, cutting members which are relatively wide and with a peripheral edge which is thinned. Preferably, the plate elements have a flared shape, for example, a frustoconical, pyramidal or spherical cap-like shape, and the like. The shape of the plate element may define a planar base which can face away from the side opposite the support. The form of the plate may further define a peak zone which has smaller dimensions than the planar base. There may project from the peak zone a shank which is mounted with play in a hole in the support. The form of the plate element is simple to produce, easy to clean and quite resistant, particularly if the shank is produced to be integral with the flared member of the plate. In a different manner, the shank may be the shank of a screw inserted in the member of the plate in order to make the construction of the plate and the possible replacement thereof even simpler. In this case, the head of the screw may be countersunk in the planar base of the plate so as not to project therefrom. Preferably, the head of the screw is flush with the planar base so as to promote the cleaning of the plate.

According to another aspect, there is described a machinery item for preparing food products which comprises an emulsifying tool of the type described briefly above. The emulsifying tool may be part of a kit of interchangeable tools supplied with the machinery. The emulsifying tool may be inserted in a process tank of the machinery, and be connected, by means of the movement transmission member, to a drive shaft which projects from the base of the process tank. According to a preferred aspect, the support of the emulsifying tool is positioned in the process tank at such a height that the cutting members have small spacing from the base of the process tank.

As a result of the emulsifying tool of the present invention, the machinery is capable of rapidly preparing without any effort any type of food product which involves an emulsion or dissolution of ingredients. The possibility of working at a pressure other than atmospheric pressure makes the use of the emulsifying tool described particularly efficient, promoting the rapid production of emulsions, such as mayonnaise, creams, sauces and other food preparations of the type, with a particularly appreciable flavour.

### Brief description of the drawings

Additional characteristics and advantages will become evident from the following detailed description of a preferred embodiment, with reference to the appended drawings which are given purely by way of non-limiting example and in which:
- Figure 1 is a perspective view of an emulsifying tool which incorporates aspects of the present invention;
- Figure 2 is a plan view of the emulsifying tool of Figure 1;
- Figure 3 is a longitudinal section along the line III-III of Figure 2;
- Figure 4 is a longitudinal section, drawn to an enlarged scale, of a cutting member of the emulsifying tool; and
- Figure 5 is a longitudinal section of a variant of the cutting member of Figure 4.

### Detailed description

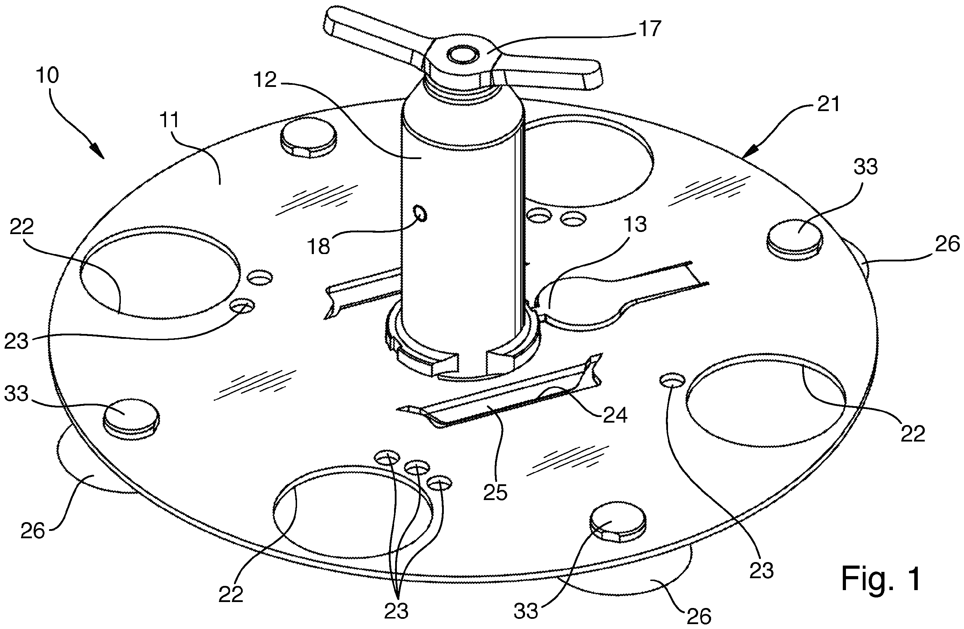

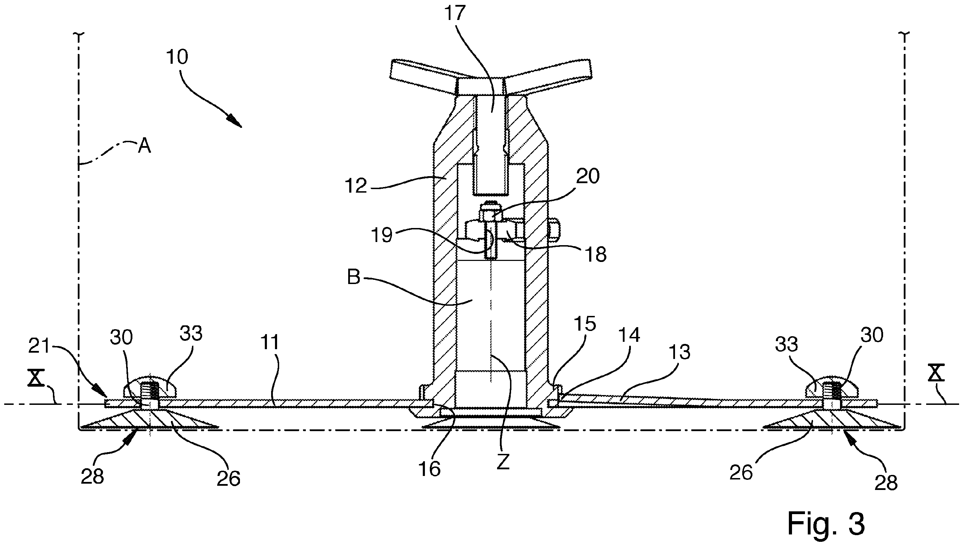

Now with reference to Figures 1 to 3, there is illustrated an emulsifying tool 10 which is also referred to as a dissolving or dispersing tool. The emulsifying tool 10 is provided so as to be able to be used in known machinery for preparing food, for example, in the machine described in EP 1603437. Such machinery generally comprises a process tank, for example, a cylindrical tank, which is indicated with the letter A in Figure 3 with a thin line. The process tank can be hermetically closed in order to produce a preparation chamber for food products. The machinery may comprise a heating system, by means of which it is possible to cook the food products. It may comprise a system for varying the pressure inside the process chamber, for example, in order to increase the pressure thereof or, conversely, to reduce it with respect to atmospheric pressure. Inside the process tank there can be mounted in an interchangeable manner processing tools, for example, for cutting, mixing or refining the ingredients and the food product being prepared. The tools are mounted on a drive shaft, which is indicated with the letter B in Figure 3 with a thin line and which projects from the base of the process tank and is rotatable about a centre axis Z.

The emulsifying tool 10 comprises a support 11 which extends along a main plane which is indicated with the line X-X in Figure 3 and which is substantially horizontal in the preferred embodiment illustrated. The support 11 may be a disk, as illustrated, but could also be constructed in the form of a dial, ring or other suitable shapes. The support 11 is mounted, preferably with snap-fitting or coupling, on a metal tube 12 which is placed in a central position with respect to the support 11. In order to lock the support 11 on the metal tube 12, there is provided a flexible tongue 13 with a tooth 14 with an end which interacts with a projection 15 provided on the metal tube 12 when the metal tube is inserted in a central opening 16 of the support 11. In particular, the tooth 14 is configured in such a manner that during the step of locking the support 11 to the metal tube 12, it is inserted in a respective seat which is present in the outer perimeter of the projection 15. During the step of mounting the metal tube 12, the tongue 13 is pressed downwards so that the projection 15 can rotate above the tooth 14 until the tooth itself, by moving into alignment with the seat thereof, can snap upwards into the same seat in order to thereby ensure the radial keying of the support 11 with respect to the metal tube 12. The vertical locking of the support 11 on the metal tube 12 is ensured by the two projections 15 which by rotating are arranged above corresponding shaped projections of the opening 16.

The interior of the metal tube is hollow in order to be able to be inserted on the rotatable shaft B of the machinery. Inside the metal tube 12 there is mounted a nut screw 19 with a cross-member 18 fixed to the shaft of the metal tube. There is screwed into the nut screw 19 a screw 20 for adjusting the height of the metal tube 12, by means of which the introduction height of the metal tube 12 on the rotatable shaft B is adjusted and consequently also the height of the support 11 with respect to the base of the process tank A. At the upper end of the metal tube 12 there is provided a thumb screw 17, by means of which it is possible to assemble and disassemble the emulsifying tool 10 on/from the rotatable shaft B.

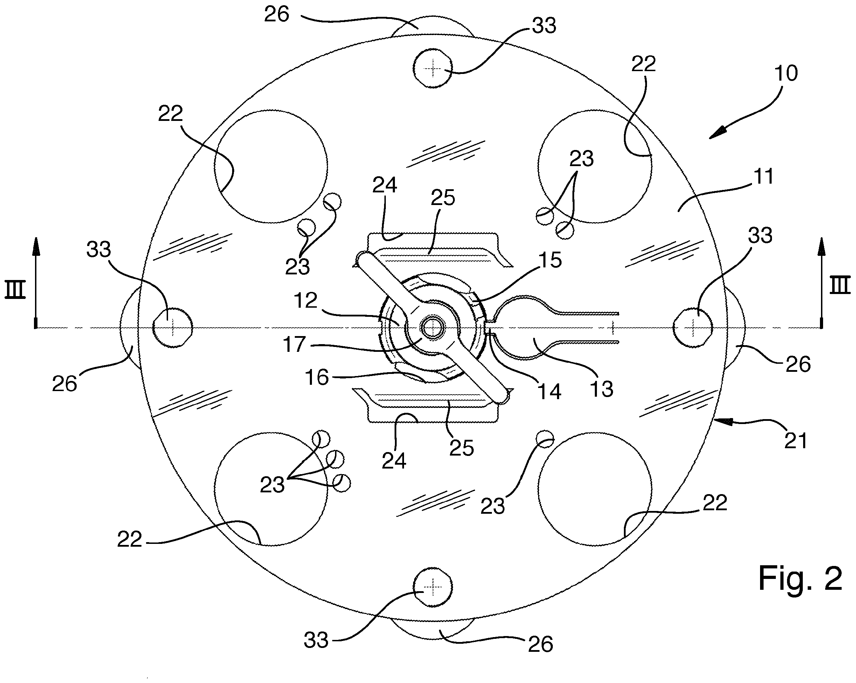

The support 11 extends so as to occupy virtually all the transverse area of the process tank A. There are formed in the support 11, in a position radially near the peripheral edge 21 thereof, extensive apertures 22 which, in the preferred though non-limiting form of the Figures, are circular, preferably with an equal extent. The apertures 22 are all arranged with the same spacing from the peripheral edge 21 and in particular the centres thereof are preferably located on the same concentric circumference with respect to the support 11. There are preferably four apertures 22 which are spaced apart regularly from each other by 90°. Small holes 23 which are distributed in an asymmetrical manner on the support 11 are formed near the apertures 22. In particular, as can be seen in the Figures, a single hole 23 is provided near a first aperture 22. A group of two adjacent holes 23 is provided near a second aperture 22 adjacent to the first aperture. By moving sequentially in a counterclockwise direction in Figures 1 and 2, near a third aperture 22 there is further formed a group of two holes 23, but which are spaced further apart from each other than the preceding group. A group of three holes 23 is formed near the fourth aperture 22. The holes 23 preferably all have the same dimensions, in particular the same diameter. The holes 23 are preferably arranged in a state grouped symmetrically with respect to the radius which extends through the centre of the aperture 22 nearest them. The presence of the holes 23 brings about asymmetry in the balancing of the support 11 and in the flow of product which passes through it during the rotation so as to promote an emulsion with a texture which is not too uniform and which has a flavour which is particularly appreciated.

There are formed in the support 11 two elongate openings 24 which are arranged beside the central opening 16 at opposite sides with respect to the metal tube 12. The elongate openings 24 are preferably constructed by being half-cut in such a manner that a portion of the material of the support 11 can be bent downwards in order to form wings 25 which promote the emulsion process by stirring the product near the central zone of the emulsifying tool 10.

Movable plates 26 are mounted on the support 11. The movable plates 26 are preferably mounted in an alternating and equidistant manner from the apertures 22. The movable plates 26 have a member 27 with a generally flared shape, for example, a frustoconical shape as illustrated in the Figures, even though the possibility of constructing plates 26 with a pyramid shape or more rounded shape is not excluded, for example, in the form of a spherical cap. The base 28 of the movable plates 26 is directed towards the base of the process tank A, preferably with minimal spacing therefrom. In order to position the plates 26 at the correct distance from the base of the process tank, there is carried out calibration on the adjustment screw 20 in order to raise or lower the metal tube 12 and therewith the support 11 which carries the plates 26. As clearly shown in the Figures, a portion of the base 28 of the plates 26 projects laterally outside the peripheral edge 21 of the support 11. The plates 26 are thereby positioned at a minimum distance from the internal side wall of the process tank A.

At the side opposite the base 28, a shank 30 with a threaded end projects from the peak 29 of the member 27 of the plate 26. The shank 30 is constructed to be integral with the member 27. The shank 30 is inserted with play inside a corresponding hole 32 in the support 11. In this manner, the plate 26 is mounted to be loose on the support 11. In other words, the diameter of the shank is narrower than the hole 32 in the support 11 so that the shank 30 can slightly oscillate in the hole 32. The shank 30 is secured to the support 11 by means of an abutment fixed at the end thereof, for example, as a result of a nut 33 which is screwed to the threaded end thereof. The nut 33 is preferably a blind nut with the upper portion rounded in order to promote the cleaning of the emulsifying tool at the end of the preparation of a food product.

The length of the shank 30 is such that the plate 28 is not tight against the face of the support 11 but instead remains slightly remote therefrom, for example, with a spacing of a few millimetres. Generally, the plates 26 are secured to the support 11 in a loose manner and have a given freedom of movement in a vertical direction, in terms of rotation and oscillation, vaguely resembling the metal disks of a tambourine. This freedom of movement is particularly effective for the purposes of separation of the molecules of the products inside the process tank A, thereby producing a particularly refined emulsion. The configuration of the plates 26 is such that they can swing in a state suspended on the plate 11, which makes them particularly easy to clean at the end of food preparation, simply by directing a jet of water onto them or by shaking them by oscillating the emulsifying tool inside the process tank A which is filled with water. As a result of the fact that the plates 26 are screwed to the support 11, it is possible to disassemble them and where applicable to replace them individually, thereby making both the ordinary handling and the unusual repair of the emulsifying tool 10 convenient, easy and economical.

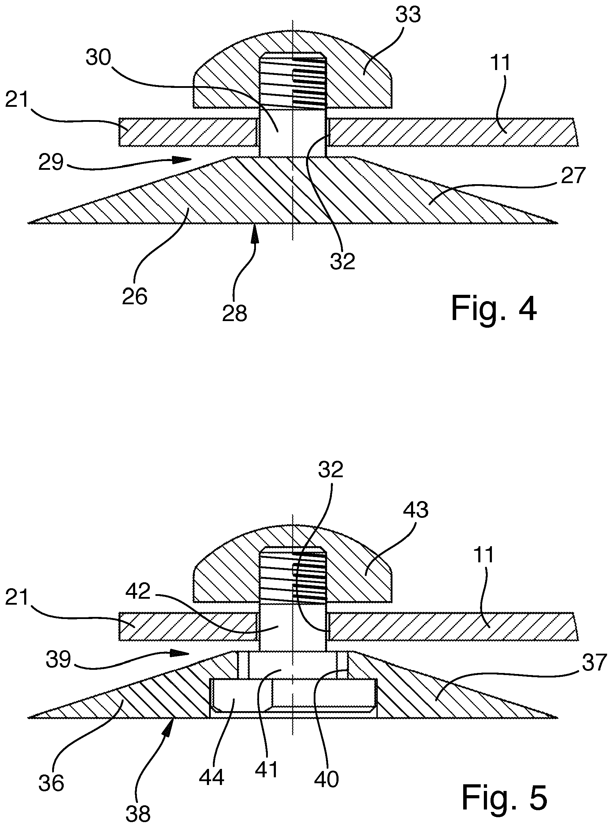

Figure 5 illustrates a variant of a movable plate for the support 11. The movable plate 36 has a geometry which is substantially similar to the one described above. More specifically, the movable plate 36 comprises a member 37 with a generally flared shape, for example, a frustoconical or pyramidal shape, or also with a more rounded shape, for example, in the form of a spherical cap. In this case, the base 38 of the member 37 of the movable plate 36 is also directed towards the base of the process tank A, that is to say, facing away from the side opposite the support 11. The base 38 projects over a portion from the peripheral edge of the support 11 in order to approach the internal side wall of the process tank A. The member 37 of the movable plate 36 has an axial hole 40, in which there is inserted a screw 41, the shank 42 of which projects from the peak 39 of the member 37. The shank 42 is inserted in the hole 32 in the support 11 which has a greater diameter so as to leave freedoms of oscillation and sliding for the plate 36. A nut 43 is screwed on the threaded end of the shank 42 for loosely connecting the plate 36 to the support 11. The screw 41 can be a stud bolt or, as illustrated in Figure 5, a screw with a head 44 which in this case is preferably countersunk in a corresponding recess formed in the base 38 of the plate 36.

Naturally, the principle of the invention remaining the same, the forms of embodiment and details of construction may be varied widely with respect to those described and illustrated, without thereby departing from the scope of the present invention, which is defined by the claims.

## Claims

1. An emulsifying tool for machinery for preparing food products, comprising a support (11) which extends along a main plane (X-X) with respect to which there are defined an emulsion area above and an emulsion area below, which communicate with each other mainly through communication openings (22, 23) which are formed in the support (11), a movement transmission member (12) being positioned centrally on the support (11) in order to transmit a rotational movement about a centre axis (Z) which is perpendicular to the main plane (X-X) thereto during use, cutting members (26, 36) being mounted to be loose on the periphery of the support (11) so as to oscillate with respect to the above-mentioned main plane (X-X).

2. An emulsifying tool according to claim 1, wherein the support (11) is a disk.

3. An emulsifying tool according to claim 1 or 2, wherein the communication openings (22, 23) are of circular form.

4. An emulsifying tool according to any one of the preceding claims, wherein the communication openings (22, 23) comprise a plurality of main openings (22) which are distributed in an angularly equidistant manner over the support (11) near the periphery (21) thereof.

5. An emulsifying tool according to claim 4, comprising a plurality of secondary openings (23) which have dimensions smaller than the main openings (22) and which are distributed in an angularly non-uniform manner near the main openings (22) .

6. An emulsifying tool according to any one of the preceding claims, wherein the cutting members each comprise a plate element (26, 36) which has a flared shape which defines a planar base (28, 38) which faces away from the side opposite the support (11) and a peak zone (29, 39) which has smaller dimensions than the planar base (28, 38), from which there projects a shank (30, 42) which is mounted with play in a respective hole (32) in the support (11).

7. An emulsifying tool according to claim 6, wherein the shank (30) is integral with the member of the plate element (26) .

8. An emulsifying tool according to claim 6, wherein the shank (42) is part of a screw (40) inserted in the member (37) of the plate element (36) with the head (44) countersunk in the planar base (38).

9. A machinery item for preparing food products, comprising an emulsifying tool (10) according to any one of the preceding claims which is inserted in a process tank (A) and which is connected, by means of the movement transmission member (12), to a drive shaft (B) which projects from the base of the process tank (A).

10. A machinery item for preparing food products according to claim 9, wherein the support (11) of the emulsifying tool (10) is positioned in the process tank at such a height that the cutting members (26, 36) are near the base of the process tank (A).

## Patentansprüche

1. Emulgierwerkzeug für Maschinen zum Zubereiten von Lebensmitteln, umfassend eine Stütze (11), die sich entlang einer Hauptebene (X-X) erstreckt, hinsichtlich der ein Emulgierbereich darüber und ein Emulgierbereich darunter definiert sind, die durch in der Stütze (11) gebildete Verbindungsöffnungen (22, 23) miteinander in Verbindung stehen, wobei ein Bewegungsübertragungselement (12) zentral auf der Stütze (11) positioniert ist, um während des Gebrauchs auf diese eine Drehbewegung um eine zur Hauptebene (X-X) senkrechte Mittelachse (Z) zu übertragen, Messerelemente (26, 36), die lose an der Peripherie der Stütze (11) montiert sind, um hinsichtlich der vorgenannten Hauptebene (X-X) zu oszillieren.

2. Emulgierwerkzeug nach Anspruch 1, wobei die Stütze (11) eine Scheibe ist.

3. Emulgierwerkzeug nach Anspruch 1 oder 2, wobei die Verbindungsöffnungen (22, 23) kreisförmig sind.

4. Emulgierwerkzeug nach einem der vorangehenden Ansprüche, wobei die Verbindungsöffnungen (22, 23) eine Mehrzahl von Hauptöffnungen (22) umfassen, die in der Nähe der Peripherie (21) der Stütze (11) winkelgleich über die Stütze verteilt sind.

5. Emulgierwerkzeug nach Anspruch 4, umfassend eine Mehrzahl von Nebenöffnungen (23) mit Dimensionen, die kleiner sind als die der Hauptöffnungen (22) und die in der Nähe der Hauptöffnungen (22) in ungleichen Winkeln verteilt sind.

6. Emulgierwerkzeug nach einem der vorangehenden Ansprüche, wobei die Messerelemente jeweils ein Plattenelement (26, 36) umfassen, das eine ausgestellte Form aufweist, die eine von der gegenüberliegenden Seite der Stütze (11) abgewandte ebene Basis (28, 38) und einen Spitzenbereich (29, 39) mit kleineren Dimensionen als die der ebenen Basis (28, 38) aufweist, von welcher ein Schaft (30, 42) abragt, der mit Spiel in einer betreffenden Öffnung (32) in der Stütze (11) montiert ist.

7. Emulgierwerkzeug nach Anspruch 6, wobei der Schaft (30) einstückig mit dem Element des Plattenelements (26) ausgebildet ist.

8. Emulgierwerkzeug nach Anspruch 6, wobei der Schaft (42) Teil einer Schraube (40) ist, die in das Element (37) des Plattenelements (36) eingesetzt ist, wobei der Kopf (44) in der ebenen Basis (38) versenkt ist.

9. Maschine zum Zubereiten von Lebensmitteln, umfassend ein Emulgierwerkzeug (10) gemäß einem der vorangehenden Ansprüche, welches in einen Bearbeitungsbehälter (A) eingesetzt ist und mittels des Bewegungsübertragungselements (12) mit einer Antriebswelle (B) verbunden ist, die von der Basis des Bearbeitungsbehälter (A) abragt.

10. Maschine zum Zubereiten von Lebensmitteln nach Anspruch 9, wobei die Stütze (11) des Emulgierwerkzeugs (10) in dem Bearbeitungsbehälter auf einer Höhe derart positioniert ist, dass sich die Messerelemente (26, 36) in der Nähe der Basis des Bearbeitungsbehälter (A) befinden.

## Revendications

1. Outil d'émulsification pour machine de préparation de produits alimentaires, comprenant un support (11) qui s'étend le long d'un plan principal (X-X) par rapport auquel sont définies une zone d'émulsion au-dessus et une zone d'émulsion au-dessous, qui communiquent entre elles principalement par des ouvertures de communication (22, 23) qui sont formées dans le support (11), un élément de transmission de mouvement (12) étant positionné de manière centrale sur le support (11) afin de transmettre un mouvement de rotation autour d'un axe central (Z) qui est perpendiculaire au plan principal (X-X) pendant l'usage, des éléments de coupe (26, 36) étant montés sans serrage sur la périphérie du support (11) afin d'osciller par rapport au plan principal (X-X) mentionné ci-dessus.

2. Outil d'émulsification selon la revendication 1, dans lequel le support (11) est un disque.

3. Outil d'émulsification selon la revendication 1 ou 2, dans lequel les ouvertures de communication (22, 23) sont de forme circulaire.

4. Outil d'émulsification selon l'une quelconque des revendications précédentes, dans lequel les ouvertures de communication (22, 23) comprennent une pluralité d'ouvertures principales (22) qui sont réparties d'une manière angulairement équidistante sur le support (11) à proximité de sa périphérie (21).

5. Outil d'émulsification selon la revendication 4, comprenant une pluralité d'ouvertures secondaires (23) qui ont des dimensions inférieures aux ouvertures principales (22) et qui sont réparties d'une manière angulairement équidistante à proximité des ouvertures principales (22).

6. Outil d'émulsification selon l'une quelconque des revendications précédentes, dans lequel les éléments de coupe comprennent chacun un élément de plaque (26, 36) qui a une forme évasée qui définit une base plane (28, 38) qui est orientée à l'opposé du côté opposé au support (11) et une zone de pic (29, 39) qui a de plus petites dimensions que la base plane (28, 38), à partir de laquelle fait saillie une tige (30, 42) qui est montée avec du jeu dans un trou (32) respectif dans le support (11).

7. Outil d'émulsification selon la revendication 6, dans lequel la tige (30) est solidaire avec l'élément de l'élément de plaque (26).

8. Outil d'émulsification selon la revendication 6, dans lequel la tige (42) fait partie d'une vis (40) insérée dans l'élément (37) de l'élément de plaque (36) avec la tête (44) encastrée dans la base plane (38).

9. Appareil pour la préparation de produits alimentaires comprenant un outil d'émulsification (10) selon l'une quelconque des revendications précédentes, qui est inséré dans une cuve de traitement (A) et qui est raccordé, au moyen de l'élément de transmission de mouvement (12), à un arbre d'entraînement (B) qui fait saillie de la base de la cuve de traitement (A).

10. Appareil pour la préparation de produits alimentaires selon la revendication 9, dans lequel le support (11) de l'outil d'émulsification (10) est positionné dans la cuve de traitement à une hauteur telle que les éléments de coupe (26, 36) sont à proximité de la base de la cuve de traitement (A).
